Europäisches Patentamt

European Patent Office

Office européen des brevets

(11) Numéro de publication: **0 094 885 B1**

(12) **FASCICULE DE BREVET EUROPEEN**

(45) Date de publication du fascicule du brevet:
**28.01.87**

(51) Int. Cl.⁴: **F 02 M 31/16**

(21) Numéro de dépôt: **83400971.4**

(22) Date de dépôt: **13.05.83**

(54) **Réchauffeur de gazole pour moteur Diesel.**

(30) Priorité: **17.05.82 FR 8208872**

(43) Date de publication de la demande:
**23.11.83 Bulletin 83/47**

(45) Mention de la délivrance du brevet:
**28.01.87 Bulletin 87/5**

(84) Etats contractants désignés:
**DE GB IT**

(56) Documents cités:
**DE - A - 2 706 090**
**DE - A - 2 754 849**
**DE - A - 2 821 473**
**FR - A - 2 451 469**
**US - A - 1 891 434**
**US - A - 3 509 859**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Fefeu, Michel, 61, avenue d'Aigrefoin, F-78470 Magny-Les-Hameaux (FR)**

(74) Mandataire: **Boivin, Claude, 9, rue Edouard-Charton, F-78000 Versailles (FR)**

ACTORUM AG

## Description

Les moteurs Diesel sont en général munis d'une pompe d'injection qui prélève du gazole dans un réservoir et le refoule dans des injecteurs du moteur; après l'avoir fait passer dans un filtre.

Lorsque le gazole est à une température inférieure à une température limite de filtrabilité qui est, par exemple, d'environ −10°C, le gazole dépose des paillettes qui viennent colmater le filtre. Le moteur peut démarrer lorsque la température du gazole est comprise entre la température limite de . filtrabilité et une température limite d'écoulement qui est, par exemple, de −18°C, mais le fonctionnement s'interrompt quand le filtre est colmaté.

Diverses solutions ont été proposés pour rendre le moteur utilisable quant la température du gazole est comprise entre les deux températures limites indiquées ci-dessus. Il est, en particulier, connu de prévoir un réchauffeur de gazole qui utilise la chaleur récupérée par l'eau de refroidissement du moteur; le moteur ayant démarré et s'étant échauffé, la température du gazole s'élève et devient supérieure à la température limite de filtrabilité de sorte que le dépôt de paillettes cesse et que les paillettes déposées se redissolvent dans le gazole; tout risque de colmatage du filtre est évité.

C'est ainsi que le document DE-A-2 754 849 décrit un moteur à combustion interne à refroidissement par eau, qui est muni d'un échangeur fixé directement à la culasse du moteur, les deux surfaces en contact étant conjuguées l'une de l'autre. La culasse comporte, sur sa face sur laquelle est appliqué l'échangeur, des orifices le mettant en communication avec l'espace de l'échangeur destiné à être parcouru par l'eau de refroidissement. Cet échangeur est constitué par la tubulure d'aspiration de sorte que le mélange combustible est préréchauffé.

Le document US-A-3 509 859 décrit un moteur à combustion interne sur le bloc moteur duquel est disposé un échangeur; ce dernier est traversé par un fluide de refroidissement et contient un serpentin qui est interposé sur le circuit d'alimentation du moteur en combustible, ce combustible étant ainsi réchauffé.

Le document US-A-1 891 439 montre un échangeur comprenant une plaque épaisse dont une face présente des rainures, formant circuit d'un premier liquide, et dont la face opposée présente une série de rainures séparées, formant circuit d'un second liquide et disposées en quinconce par rapport à la rainure du premier liquide, et un couvercle fixé sur la plaque et fermant le circuit.

Le document DE-A-2 821 473 décrit un dispositif pour réchauffer le combustible d'un moteur à combustion interne.

La présente invention a pour objet un moteur à combustion interne du type défini dans le préambule de la revendication 1 et muni d'un réchauffeur de gazole, qui est de conception particulièrement simple et efficace.

Le moteur selon l'invention est caractérisé en ce que l'échangeur fait partie d'un circuit de réchauffage du gazole et comprend une plaque épaisse dont la face opposée à la culasse présente une rainure continue en serpentin formant circuit de gazole et dont la face destinée à être fixée à la culasse présente une série de rainures séparées, formant circuit d'eau, reliées entre elles par une chambre à eau et disposées en quinconce par rapport à la rainure de gazole, et un couvercle fixé sur la plaque et fermant le circuit de gazole.

Le réchauffeur peut être associé à un régulateur thermique constitué par une vanne à trois voies qui est interposée sur le circuit du gazole, en amont de l'échangeur et est commandée par un élément thermosensible de façon à diriger le gazole en provenance du réservoir, selon sa température, soit vers l'échangeur, soit directement vers le filtre.

On a décrit ci-après, à titre d'exemple non limitatif, un mode de réalisation du moteur selon l'invention, avec référence au dessin annexé dans lequel:

La Figure 1 est un schéma montrant la culasse du moteur et l'installation de réchauffage du gazole;

La Figure 2 est une vue en plan montrant l'échangeur du réchauffeur fixé à la culasse du moteur;

La Figure 3 est une vue en élévation latérale de la culasse et montre la face de celle-ci sur laquelle l'échangeur est rapporté;

La Figure 4 est une vue en élévation du corps de l'échangeur du côté du circuit de gazole;

La Figure 5 en est une coupe suivant V–V de la Figure 4;

La Figure 6 est une vue en élévation du corps de l'échangeur du côté du circuit d'eau;

La Figure 7 en est une coupe suivant VII–VII de la Figure 6.

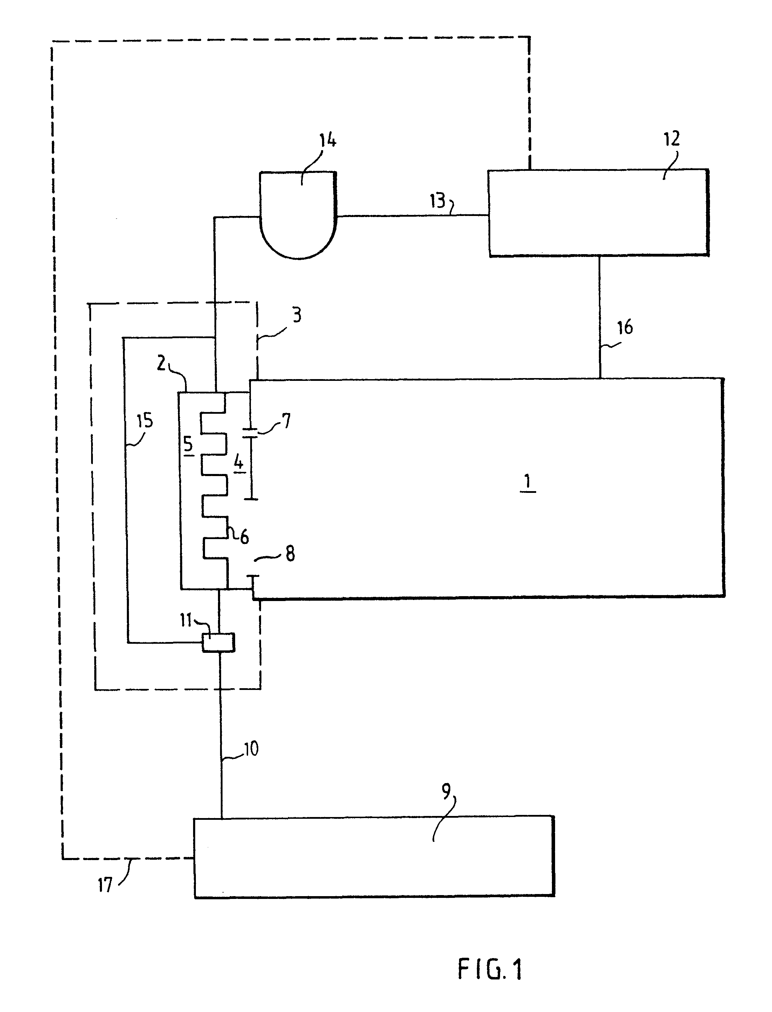

A la Figure 1, on voit en 1 la culasse d'un moteur à combustion interne. Sur cette culasse est fixé l'échangeur 2 d'un réchauffeur 3 qui est divisé en deux chambres 4 et 5 par une paroi 6. La chambre 4 communique avec la culasse par des orifices 7 et 8 qui permettent la circulation dans la chambre 4 de l'eau de refroidissement de cette culasse.

La chambre 5 de l'échangeur 2 est reliée d'une part à un réservoir de gazole 9 par une conduite 10 sur laquelle est interposé un régulateur 11, et d'autre part à une pompe 12 par une conduite 13 sur laquelle est interposé un filtre 14. Le régulateur 11 est constitué par une vanne à trois voies commandée par un élément thermosensible, constitué par exemple par une capsule de cire et qui, lorsque la température du gazole atteint une certaine valeur, relie le réservoir 9 au filtre 14 par une conduite 15 en court-circuitant la chambre 5 de l'échangeur 2. La pompe 12 est par ailleurs reliée aux injecteurs du moteur par une conduite 16 et au réservoir 9 par une conduite 17 permettant de ramener à ce réservoir l'excédent de gazole.

Lorsque la température du gazole est basse, le gazole provenant du réservoir 9 traverse l'échangeur 2, dans lequel il est réchauffé par l'eau de refroidissement du moteur, puis le filtre 14 et parvient à la pompe 12 qui l'envoie aux injecteurs du moteur, l'excédent retournant au réservoir par la conduite 17.

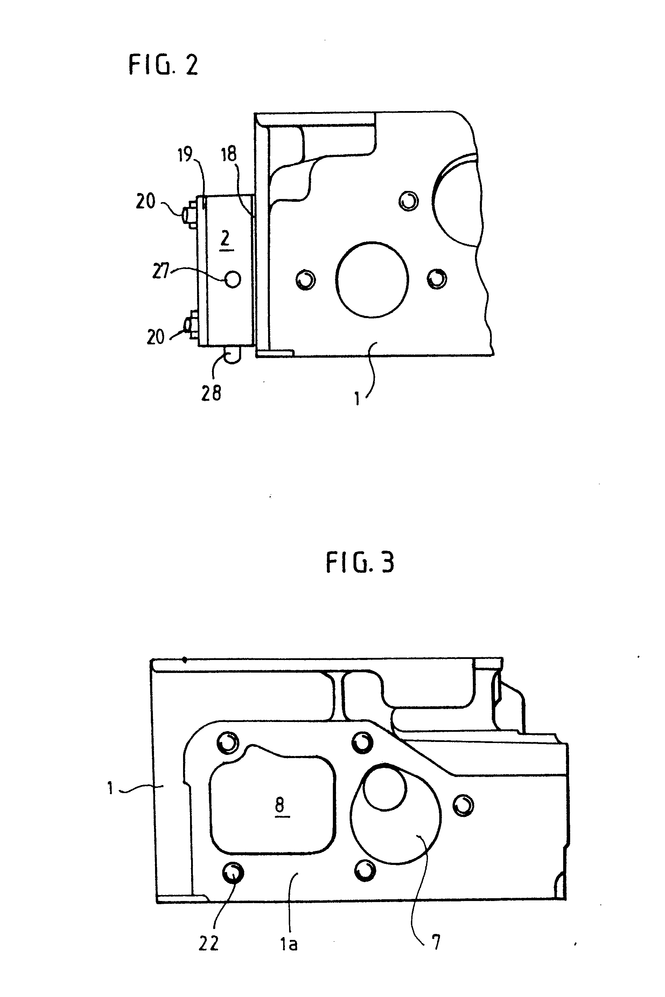

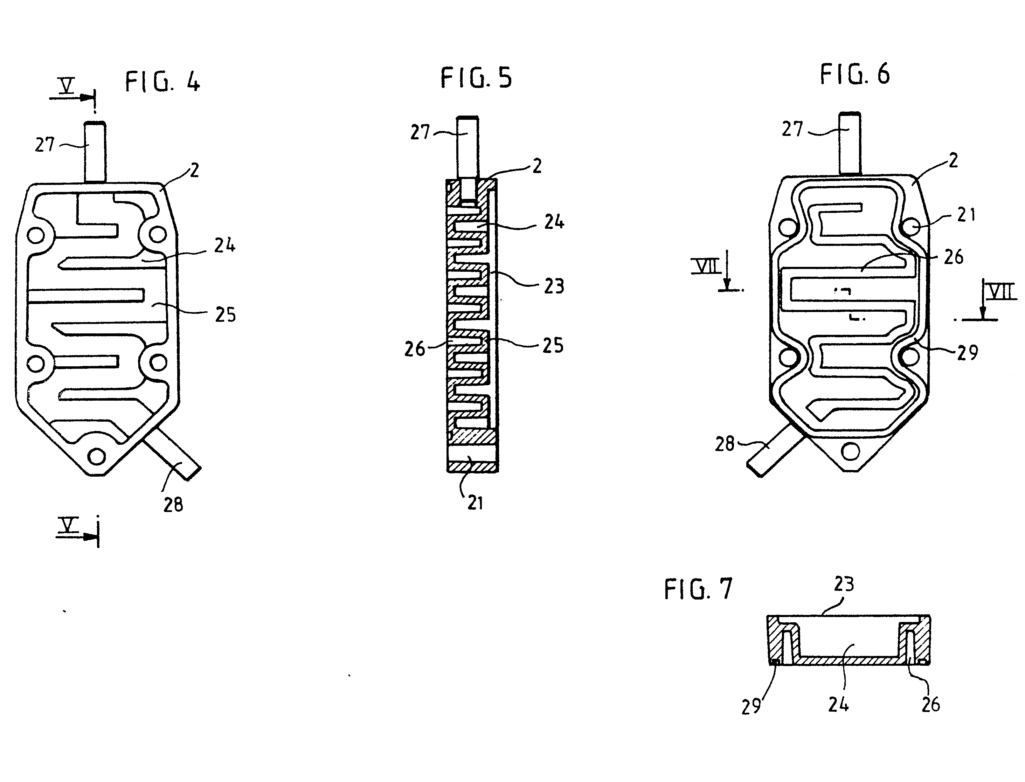

L'échangeur 2 est directement rapporté sur l'une des faces latérales 1a de la culasse 1, avec interposition d'un joint plat 18, et est fermé par un couvercle 19, l'ensemble étant fixé par des goujons 20 qui traversent des trous 21 de l'échangeur et sont vissés dans des trous taraudés 22 de la culasse (voir figures 3 et 6).

L'échangeur 2 est constitué par une plaque épaisse sur l'une des faces de laquelle a été formé un chambrage 23 formant chambre à eau et dans lequel débouchent des rainures 24 disposées en quinconce et séparées les unes des autres par un bossage continu en serpentin 25. Cette face est au contact du joint 18.

Sur la face opposée, l'échangeur 2 comporte une rainure 26 formée dans le bossage 25. Cette rainure qui est continue, et constitue la chambre 5, communique avec deux raccords 27 et 28 destinés à être reliés respectivement avec les conduites 10 et 13. L'échangeur comporte également une rainure périphérique 29 destinée à recevoir un joint torique propre à assurer l'étanchéité entre le corps de l'échangeur et le couvercle 19.

## Revendications

1. Moteur à combustion interne à refroidissement par eau qui est muni d'un échangeur (2) fixé directement à la culasse (1) du moteur, les deux surfaces en contact étant conjuguées l'une de l'autre, cette culasse (1) comportant sur sa face (1a) sur laquelle est appliqué l'échangeur, des orifices (7 et 8) la mettant en communication avec l'espace (4) de l'échangeur destiné à être parcouru par l'eau de refroidissement du moteur, caractérisé en ce que l'échangeur (2) fait partie d'un circuit de réchauffage du gazole et comprend une plaque épaisse dont la face opposée à la culasse présente une rainure continue en serpentin (26) formant circuit de gazole et dont la face destinée à être fixée à la culasse présente une série de rainures séparées (24), formant circuit d'eau, reliées entre elles par une chambre à eau (23) et disposées en quiconce par rapport à la rainure de gazole (26), et un couvercle (19) fixé sur la plaque et fermant le circuit de gazole.

2. Moteur selon la revendication 1, caractérisé en ce que le réchauffeur est associé à un régulateur thermique (11) constitué par une vanne à trois voies qui est interposée sur le circuit de gazole, en amont de l'échangeur (2) et est commandée par un élément thermosensible de façon à diriger le gazole en provenance du réservoir (9), selon sa température, soit vers l'échangeur (2), soit directement vers le filtre (14).

## Claims

1. Water cooled internal combustion engine having an exchanger (2) fixed directly to the cylinder head (1) of the engine, the two contacting surfaces mating with each other, this cylinder head (1) having on its face (1a) on which the exchanger is applied orifices (7 and 8) placing it in communication with the space (4) of the exchanger through which the cooling water of the engine is intended to flow, characterized in that the exchanger (2) forms part of a circuit for heating the fuel oil and includes a thick plate whose face opposite the cylinder head has a continuous meandering groove (26) forming a fuel oil circuit and whose face intended to be fixed to the cylinder head has a series of separate grooves (24), forming a water circuit, connected together by a water chamber (23) and disposed in a staggered arrangement with respect to the fuel oil groove (26) and a cover (19) fixed to the plate and closing the fuel oil circuit.

2. Engine according to claim 1, characterized in that the heater is associated with a heat regulator (11) formed by a three way valve which is inserted in the fuel oil circuit, upstream of the exchanger (2) and is controlled by a heat sensitive element so as to direct the fuel oil coming from the reservoir (9), depending on its temperature, either towards the exchanger (2), or directly towards the filter (14).

## Patentansprüche

1. Wassergekühlte Verbrennungskraftmaschine, die mit einem Austauscher (2) versehen ist, der direkt an dem Zylinderkopf (1) des Motors befestigt ist, wobei die beiden miteinander in Kontakt stehenden Flächen miteinander gekoppelt sind, und wobei der Zylinderkopf (1) an seiner Fläche (1a), an der der Austauscher angebracht ist, Öffnungen (7 und 8) aufweist, die sie in Verbindung mit dem Austauscherraum (4) in Verbindung setzt, der dazu bestimmt ist, von dem Kühlwasser des Motors durchflossen zu werden, dadurch gekennzeichnet, dass der Austauscher (2) Teil eines Vorerwärmungskreises für den Kraftstoff bildet und eine dicke Platte umfasst, deren vom Zylinderkopf abgewandte Seite einen durchgehenden, schlangenlinienförmigen Kanal (26) für den Kraftstoffkreislauf aufweist, während die an dem Zylinderkopf zu befestigende Seite mehrere voneinander getrennte Rillen (24) umfasst, die den Wasserkreislauf bilden und miteinander mittels einer Wasserkammer (23) verbunden sind, wobei diese Rillen jeweils versetzt zu dem Kraftstoffkanal (26) angeordnet sind, und dass auf der Platte ein Deckel (19) zum Verschliessen des Kraftstoffkanals befestigt ist.

2. Wassergekühlte Verbrennungskraftmaschine nach Anspruch 1, dadurch gekennzeichnet, dass der Wärmetauscher einem Thermoregulator (11) zugeordnet ist, der durch ein Dreiwegeventil gebildet ist, das in dem Kraftstoffkreis vor dem Austauscher (2) liegt und von einem temperaturempfindlichen Element gesteuert wird derart, dass der von dem Speicher (9) kommende Kraftstoff in Abhängigkeit von seiner Temperatur entweder durch den Austauscher (2) oder direkt zu dem Filter (14) strömt.

FIG.1

FIG. 2

FIG. 3

FIG. 4

FIG. 5

FIG. 6

FIG. 7

0 094 885